# EUROPEAN PATENT SPECIFICATION

(11) **EP 0 635 712 B1**
(45) Date of publication and mention of the grant of the patent: **14.01.1998**
(21) Application number: 94202119.7
(22) Date of filing: 19.07.1994
(51) Int. Cl.: G01N 1/38, G01N 35/00, B01L 3/02

(54) **Method of pretreating diagnostic test elements**
Verfahren zur Vorbehandlung von diagnostischen Testelementen
Méthode de prétraitement pour supports d'essais diagnostiques

(30) Priority: 21.07.1993 US 94722
(43) Date of publication of application: 25.01.1995
(73) Proprietor: Johnson & Johnson Clinical Diagnostics, Inc., Rochester New York 14650 (US)
(72) Inventor: Jacobs, Merrit Nylens, c/o Eastman Kodak Company, Rochester, New York 14650-2201 (US)
(74) Representative: Mercer, Christopher Paul

(56) References cited:
- EP-A- 0 376 110
- EP-A- 0 459 093
- WO-A-91/01364
- WO-A-92/01919
- DE-A- 3 021 190
- GB-A- 2 095 404
- US-A- 5 143 849

## Description

The present invention relates to the field of clinical analyzers for the testing of liquid analytes, and in particular to a method of preparing a test element prior to the transferring of a patient sample.

In the field of clinical analyzers for the testing of liquid analytes, a patient sample is introduced and caused to interact with a reaction chemistry to produce a signal involving the analyte of choice for detection by a sensing apparatus. A preferred technique involves the so-called dried assay technology so that patient sample is applied to dried test slide elements, each having at least one dried reactant layer. Analyzers and test elements using this technology include those manufactured by Eastman Kodak Company, both under the trademark "EKTACHEM™".

There can be problems associated with using this approach. One such problem relates to how a quantity of patient sample is dispensed on to the testing surface of a test element. Typically, a predetermined amount of patient liquid is metered from a tip orifice of a disposable pipette tip, the tip being positioned a short distance above a test element. An example of a method of dispensing patient liquid using a metering tip is described in US-A-5 143 849. Because patient liquid contains variable amounts of particulate matter, such as lipids and lipo-proteins, there is a degree of non-uniformity as to the ability of the liquid to uniformly spread when it contacts the testing surface of a test element. In typical test elements, a sample delivered from a point source has to spread horizontally, as well as vertically, through the predetermined test volume of the test element. The need for both directions of spreading introduces the possibility of flow irregularities. WO-A-92/01919 discloses a method of achieving a uniform layer of a sample by spray application of the sample from a dispensing bip.

Further, the reliability of test results is impacted by the sensitivity occurring due to differences in the makeup of samples between patients. For example, a patient may have a serum, plasma or whole blood sample which is particularly fatty, (that is: containing a higher percentage of lipids and lipoproteins than a "normal" patient). These sorts of differences are not, however, limited to non-average patients; differences in samples between patients in the so-called normal range may also impact the accuracy of test results. These effects are generally known as "matrix effects" and are based on differences between patient liquid samples, as well as sample interaction with the spreading layer of the chemistry portion of a test element.

In general, known test elements are provided with a spreading layer which is used to vertically and horizontally diffuse a patient sample into the test volume of a test element. An example of a spreading layer is described in US-A-3 992 158. Spreading layers, in general, however, are complex and expensive to manufacture.

A further example of a dry type analysis element with a spreading layer is provided in GB-A-2095404. This disclosure illustrates horizontal spreading of the liquid sample.

In addition and notwithstanding the use of spreading layers, it is generally required that a greater than needed quantity of patient liquid be dispensed on to a test element to ensure there is adequate uniformity over the detection read area of the chemistry portion of the test element. A typical read area is equivalent to a substantially circular area having a diameter of 3mm. Because additional quantities of patient liquid are required, there is a corresponding need for oversizing the chemistry portion of the test element to be manufactured, thereby increasing the size of a test element relative to the amount of read area required by known analyzers.

A related problem concerns patient samples having an inordinate quantity of an analyte that is being tested for. For example, a sample having an extreme amount of glucose beyond the sensing range of the testing instrument can not be properly measured without additional steps being taken. Typically, these steps involve dampening the effect of the analyte present by pre-mixing the liquid sample with a diluent, such as bovine serum albumin (BSA). Because diluents are inert materials, they do not react with a liquid sample, but will decrease the amount of analyte present per unit volume of dispensed liquid when the mixture is applied to a test element. Because test evaluations are made volumetrically, a corrected test value can be derived by factoring in the volume of diluent present in the dispensed mixed liquid. For example, having equal volumes of diluent and patient sample deposited within the test volume of a test element would require a multiplicative factor of about two to compensate for the presence of the diluent.

Conventionally, diluent is applied to a patient sample by first pre-mixing a quantity of the sample and the diluent of choice in a container off-line, and then dispensing the mixed sample on to the test surface of a test element from a suspended pipette tip. The need for additional space, as well as the additional processing time required to separately mix the sample and diluent together prior to the aspiration and dispensing of a sample, constrains the effective throughput achievable in automated analyzers. Further, pre-mixing of diluent and sample requires the use of additional disposables, such as pipette tips, significantly impacting the costs to analyzers which are capable of performing a multiplicity of tests per patient, or those having high throughputs.

DE-A-3021190 discloses an apparatus for applying a sample to a wetted film. The transfer of liquid to the film is achieved by rollers which apply the liquid gradually across the film.

Therefore, it has been a problem to provide an improved method of providing diluent to a test element which is cheaper and requires less space than current means.

There is a further problem in providing a method of pretreating a test element which will provide a transport media to allow a dispensed patient sample to migrate along the test surface of a test element thereby obviating the need for a horizontally diffusing spreading layer.

The present invention provides a method of premetering a variable amount of diluent on to a test element in a particularly uniform manner to reduce the matrix effect by making all fluids behave closer to the fluid characteristic of the diluent. This technique also provides the ability to dilute the fluid more economically, and with no significant impact on throughput.

This method of premetering a test element also provides a wetted test element upon which a patient sample can be metered to produce a test sample which is less susceptible to the problems of washout and transport, thereby improving the performance of tests on the test sample.

More specifically, in accordance with one aspect of the present invention, there is provided a method of applying a patient sample to a test element as defined in the claims which is useful for the testing of liquid analytes in the sample, the test element comprising a support frame and a test surface area, the method being carried out prior to testing and comprising the steps of:-
a) depositing a quantity of liquid diluent on to the entirety of a test surface area of a test element so as to achieve instantaneous contact of the diluent uniformly across the surface area as a surface-dispersed quantity all at once; and
b) dispensing a liquid sample on to the test surface area while it is still wetted with the diluent.

An advantageous feature of the present invention is that pretreating the test element first with a substantially uniform layer of diluent creates a transport media for the patient sample by which sample can be more uniformly and evenly distributed to the testing surface of a test element thereby requiring less patient fluid to provide an equally effective detection area for a clinical analyzer.

Because less patient liquid is required there can be a corresponding and significant reduction in the required size of the chemistry portion of the test element.

A further advantageous feature of the invention is that a quantity of liquid diluent can be applied directly to a test element without first having to perform costly and expensive off-line mixing of diluent and sample prior to the dispensing of sample on to a test slide. In addition, the prespreading of a low viscosity diluent layer provides a means of effectively spreading the patient sample across the reagent layer, thus obviating the need for a horizontally diffusing spreading layer.

Further, the addition of diluent to a patient sample also improves the spreadability of a metered quantity of sample, given that the diluent not only masks the effects of the solids which may be present in the sample to improve the flow characteristics of the sample, but also improves the ability of the sample to migrate laterally upon dispersal on to the test element.

In addition, the use of a prespread liquid diluent dissolves the soluble components in the dried chemistry and spreads the components uniformly through the chemistry without interaction of the physical properties and metering interaction of the sample fluid.

For a better understanding of the present invention, reference will now be made, by way of example only, to the accompanying drawings in which:-
Figure 1 is a fragmentary sectioned side elevational view of a preferred embodiment of the apparatus according to the present invention;
Figure 2 is a bottom view of the apparatus illustrated in Figure 1;
Figures 3A and 3B are fragmentary sectioned side elevational views of the apparatus shown in Figure 1, illustrating the transfer of a liquid from a source to a liquid-supporting surface of the apparatus of Figure 1;
Figure 4 is a sectioned side elevational view of the apparatus shown in Figures 1, 2, 3A and 3B illustrating the removal of excess liquid from the transfer element prior to the transfer of liquid to a test element;
Figures 5A and 5B are fragmentary sectioned side elevational views of the apparatus shown in Figures 1 to 4, illustrating the dispensing of a liquid on to the testing surface of a diagnostic test element;
Figure 6 is a sectioned side elevational view of the test element shown in Figures 5A and 5B, illustrating the migration of patient sample through the diluent pretreatment layer and into the chemistry portion of the test element;
Figure 7 is a partial top view of the test element shown in Figures 5A and 5B after liquid has been dispensed thereto illustrating the sizing of a chemistry portion in accordance with the present invention with that of a known test element.

The invention is hereinafter described in the context of the preferred embodiments. In addition, the invention is useful regardless of the liquid being dispensed, the kind of analyzer or test element which is being used, and regardless of whether the surface is a dried slide test element, or even any kind of test element, since the described methods and associated apparatus can also be used to meter on to any surface where the second liquid to be applied needs to be diluted.

Terms such as "up", "down", "lower", "vertical", "horizontal" and "bottom" as used herein refer to the orientation of parts when the apparatus described are positioned in the customary position of use. The term "surface-dispersed quantity" means, a quantity in which the surface area/volume ratio is approximately 1:1 cm⁻¹, for example, if a 10cm³ volume has a 10cm² dispersed surface area and a 1cm thickness, its ratio is 1:1 cm⁻¹. Ratios of 9:10 cm⁻¹ or 11:10 cm⁻¹ are included here.

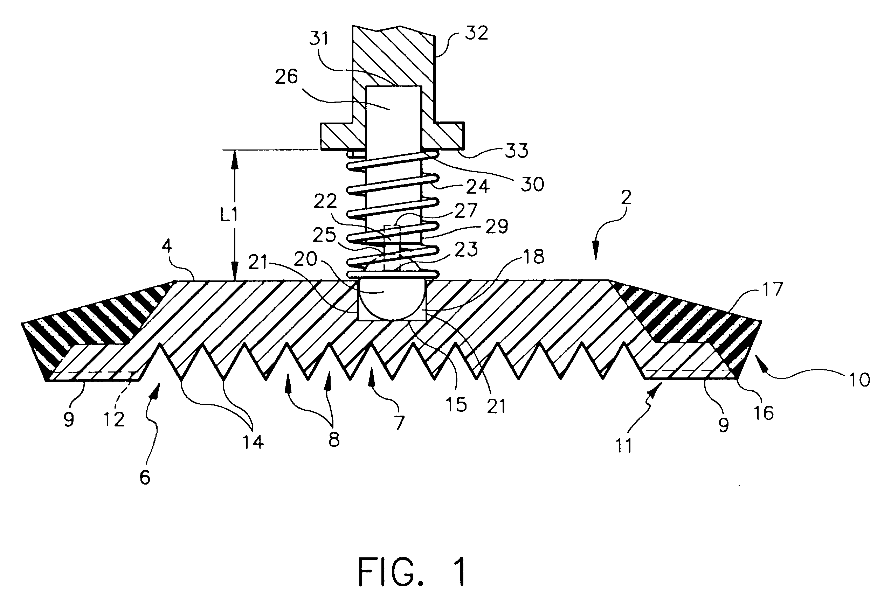

A preferred embodiment of the present invention is illustrated in Figures 1 to 7.

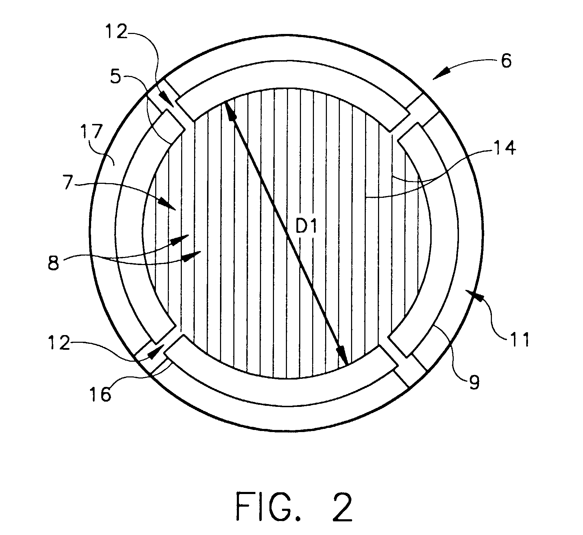

Referring to Figures 1 and 2, a transfer element 10 is provided having a main body 2 consisting of an upper surface 4 and a lower surface 6. Lower surface 6 is defined by a liquid-supporting section 7 further defined by a series of substantially parallel, V-shaped grooves 8 which are disposed over substantially the entirety of supporting section 7. Alternate configurations can also be provided for defining liquid-supporting section 7; for example, grooves 8 can be configured in a diamond-shaped pattern (not shown) instead of a parallel arrangement.

Referring to Figure 2, lower surface 6 is also defined by a ring-like portion 11 circumferentially disposed about substantially the entire outer periphery 5 of liquid supporting portion 7 and having an outer peripheral edge 16. Ring portion 11 is preferably made with a smooth surface, except for a variable number of vent channels 12. In addition, lower surface 6 has a diameter D1, which is preferably at least as large as the test surface area of a test slide element.

Alternatively, liquid-supporting portion 7 can be textured (not shown) as opposed to providing grooves, provided capability is found in the surface for supporting a sufficient quantity of liquid to effectively coat the test surface area of a test element. In the embodiment illustrated, Figures 1 and 2, grooves 8 have a depth of about 200µm and a spacing of about 400µm. Sizings can be varied depending on the quantity of liquid to be supported and transferred to a test element.

Though main body 2 can be constructed of almost any material, it is preferred that lower surface 6, particularly grooves 8, be made from a compliant and liquid-impermeable material. In the embodiment illustrated, main body 2 is made from a plastic with minimal protein adhesion, such as polypropylene or polyethylene. Preferably, ring portion 11 and liquid-supporting portion 7 are made from the same material.

Referring to Figures 1 and 2, grooves 8 are formed in surface 6 between ring portion 11, to form a series of ribs 14, which are preferably rounded to minimize damaging a chemistry portion of a test element when brought into contact therewith. A contacting surface 9 defined by ring portion 11 is made to be flush with ribs 14.

To absorb excess liquid at the periphery of surface 6, a disc 17, Figure 1, made of a liquid absorbent material is preferably continuously disposed about main body 2, adjacent peripheral edge 16 and generally in contact with ring portion 11, except in the vicinity of vent channels 12, where it is slightly undercut so as not to prematurely siphon liquid from a portion of grooves 8, Figure 2. Additionally, cross channels (not shown) may be provided, extending perpendicularly to grooves 8.

Disc 17 is made to extend radially inwardly from edge 16 and is attached to upper surface 4. In the embodiment illustrated, disc 17 is made of a high density, open-cell urethane foam, although other non-reactive, liquid absorbing materials, such as absorbent paper, may be provided.

Transfer element 10 is also made preferably to be pivotably and vertically movable. Referring to Figure 1, a ball 20, is seated within a centrally disposed recess 18 defined in upper surface 4 of transfer element 10. Preferably, recess 18 is a defined opening having a substantially orthogonal configuration, the opening further defined by a bottom surface 15 and side seating surfaces 21.

One end 23 of a mounting arm 22 extending vertically in the embodiment illustrated is threaded into a bore 25 defined in ball 20 oppositely situated into recess 18. The remaining end 27 of mounting arm 22 extends upwardly, in the embodiment illustrated, and is threaded into the lower end 29 of a cylindrical supporting member 26. The other end 31 of supporting member 26 is inserted into a force application member 32, having a centrally disposed sleeve 30. Supporting member 26 is shaped so as to be slidingly engageable within sleeve 30. A helical spring 24, having a length L1, is positioned between upper surface 4 of main body 2 and a lower surface 33 of force application member 32, and is circumferentially disposed about supporting member 26. Force application member 32 is mechanically attached to the rest of an analyzer (not shown). Ball 20, mounting arm 22, spring 24, supporting member 26, and force application member 32 can be made part of the analyzer, or part of transfer element 10 as described.

It can be seen, however, that other alternative means of allowing the transfer element to be pivotable are acceptable; for example, member 26 could be provided as a flexible stem (not shown) connected directly to transfer element 10, and allowing element 10 to bend from a neutral position in the event of contact irregularities with a slide element.

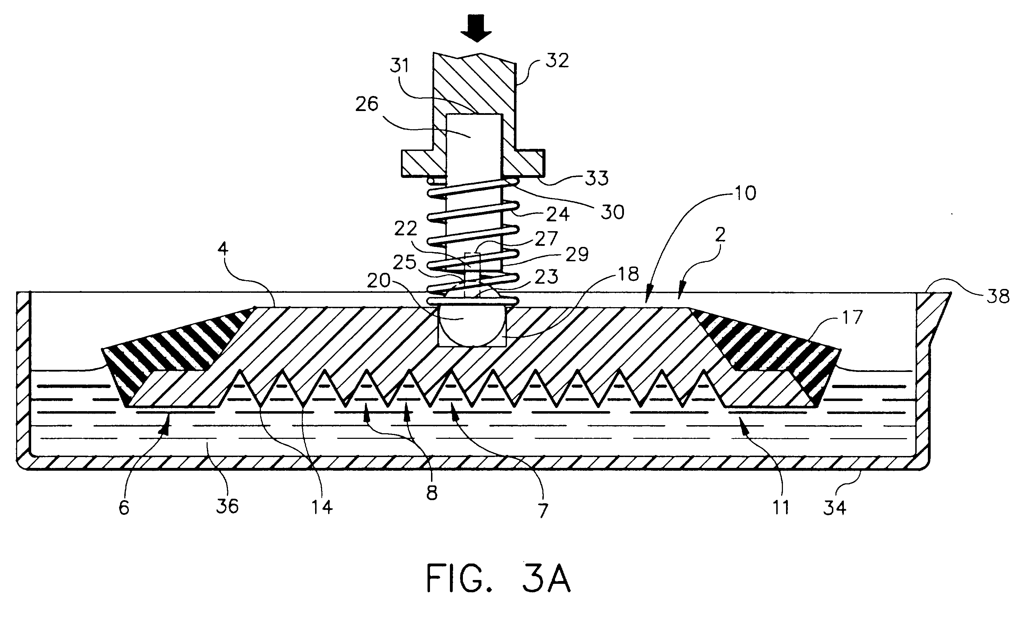

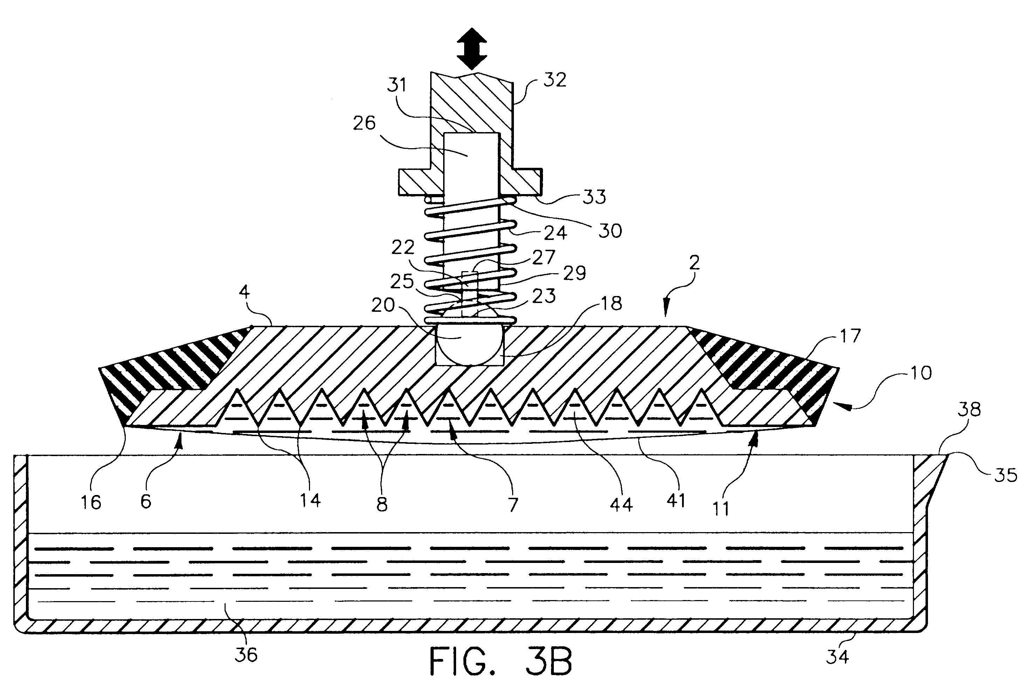

In operation and referring to Figures 3A and 3B, transfer element 10 is first lowered into container 34, as illustrated in Figure 3A, immersing lower surface 6 to a level in which grooves 8 can acquire contained liquid 36 thereupon, such as a diluent. Most of the air contained within grooves 8 is vented outwardly of transfer element 10 through defined vent channels 12, Figure 2. Transfer element 10 is then withdrawn from container 34. As shown in Figure 3B, as transfer element 10 removed from container 34, a quantity 44 of liquid is retained on surface 6, such as within grooves 8, due to the adhesion of fluid to ribs 14.

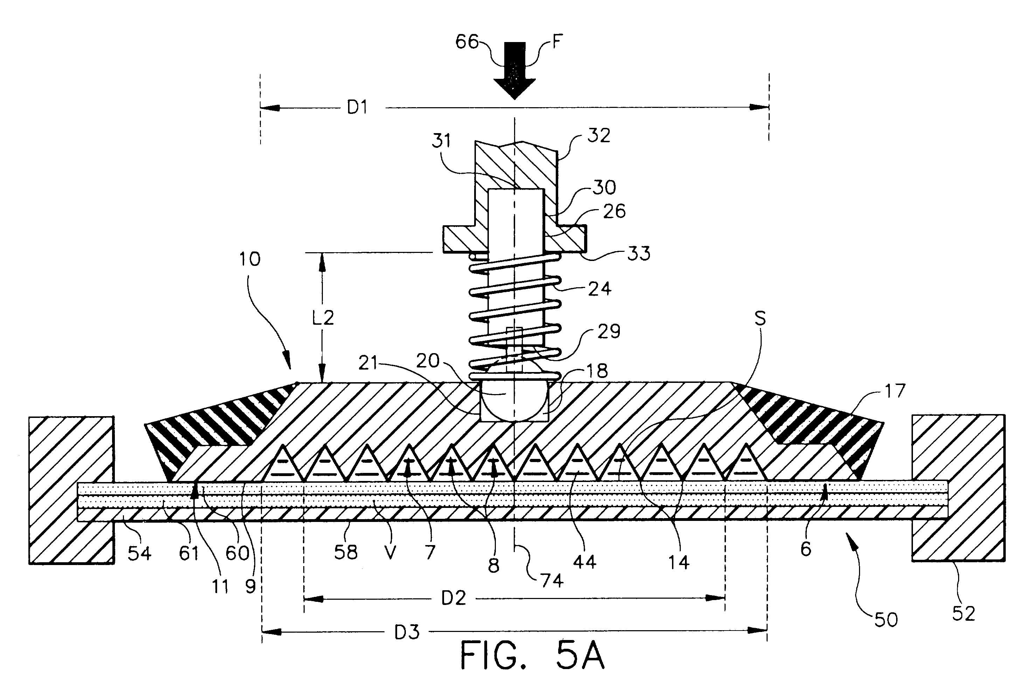

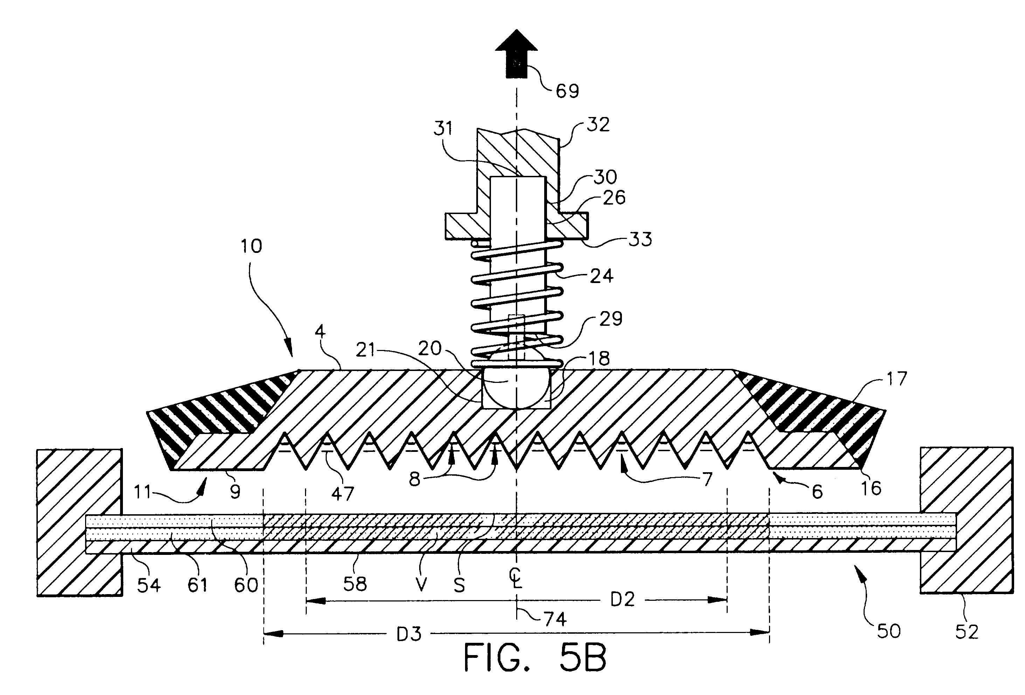

As transfer element 10 is withdrawn from container 34 a meniscus 41, containing an excess of diluent in addition to quantity 44 required to fill grooves 8, forms on lower surface 6, due to the surface tension of the diluent. It is preferable that meniscus 41 be minimized prior to the dispensing of the diluent from transfer element 10 in order to avoid potential flooding of test element 50, Figures 5A and 5B, and more specifically to adequately control the volume of fluid to be applied thereto.

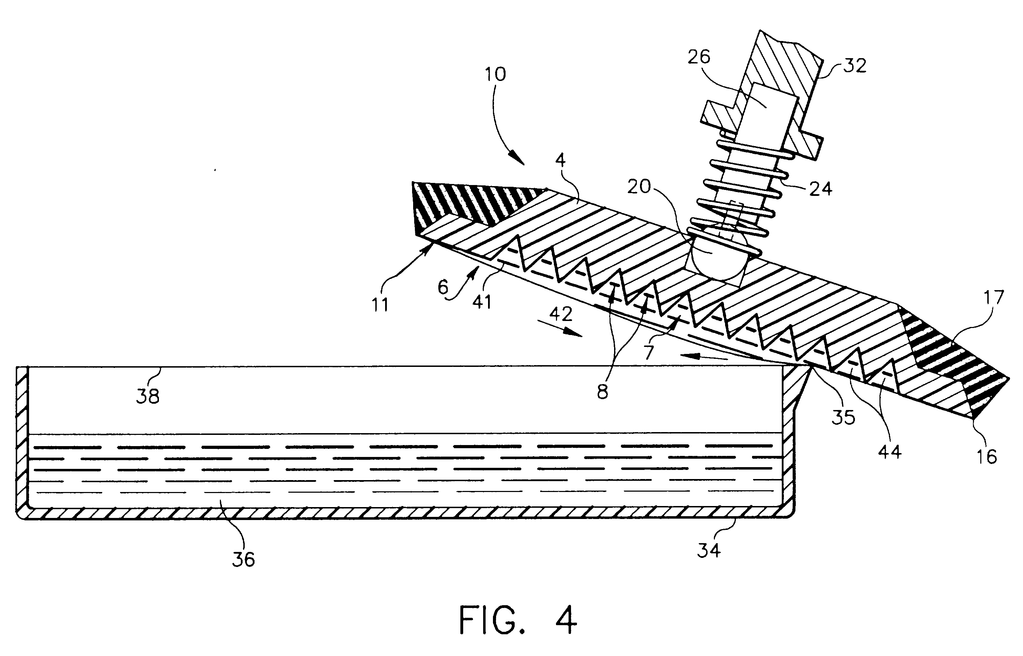

Container 34 preferably provides means for scraping against lower surface 6. Specifically, and referring to Figure 4, a container edge 38 is provided with a knife edge 35. Beginning at one side of lower surface 6, transfer element 10 can be drawn across knife edge 35 to remove meniscus 41, per arrows 42, leaving a substantially uniform layer of patient liquid 44 within grooves 8. As lower surface 6 is drawn across knife edge 35, the excess liquid comprising meniscus 41 is squeegeed from one side of lower surface 6 to the other, while a quantity of liquid 44 within grooves 8 remains. In addition, the external energy supplied to grooves 8 by scraping knife edge 35 against surface 6 serves to evacuate residual air pockets formed within grooves 8, if any, allowing the grooves to fill with liquid 44.

Any small portion of meniscus 41 remaining along outer peripheral edge 16 after lower surface 6 has been drawn along knife edge 35 can then be wicked by circumferentially disposed absorbent disc 17, positioned adjacent thereto.

Referring to Figures 5A and 5B, transfer element 10 is then positioned directly over a test element 50. Test element 50 comprises a plastic support frame 52 and a centrally disposed chemistry portion 58, preferably having a circular configuration, a test volume V subtending test surface area S having a diameter D3, and comprising dried reagents distributed through two layers 60, 61 on a support 54. In the embodiment illustrated, D3 is about 4mm. Transfer element 10 is then lowered until ribs 14 are brought into contact with chemistry portion 58. As noted above, lower surface 6 has a diameter D1, which is preferably equal to diameter D3 of area S. Top layer 60 can be a reagent layer without a spreading layer, or it can be a spreading layer as described in US-A-3 992 158.

Downward pressure in the amount of force F is then exerted by force application member 32, as shown by arrow 66, substantially along a vertically extending centerline 74. As force F is applied, supporting member 26 is further engaged into sleeve 30 and the distance between surface 33 and upper surface 4 is decreased to L2, placing helical spring 24 into compressive contact with upper surface 4, and centrally distributing the applied compressive force F to transfer element 10. The effect of providing compressive force F is that liquid-supporting portion 7 and chemistry portion 58 are brought into compressive contact.

Referring to Figure 5A, under force F, liquid 44, contained within each of grooves 8 is then uniformly communicated to the entirety of test surface area S of test volume V, effectively blotting liquid material 44 on to the entirety of area S all at once upon removal of transfer element 10, Figure 5B. Liquid 44 is then quickly absorbed (or vertically diffused) by porous reactant layers 60, 61. In addition, disc 17 is effective in absorbing excess liquid from outer peripheral edge 16 when each of the surfaces are brought into compressive contact, so as not to flood test element 50. Ring portion 11, having a surface 9 which is flush with edges 14, however, provides a barrier so that only excess liquid is wicked by disc 17 upon contact.

In the embodiment illustrated, a compressive force of about 0.14N (0.5ozf) is sufficient to transfer a patient liquid to chemistry portion 58 without damage thereto. The amount of permissible force required, however, can be varied depending upon material properties and the fragility of the chemistry portion provided. Transfer element 10 is then withdrawn from test element 50, as shown in Figure 5B, by arrow 69.

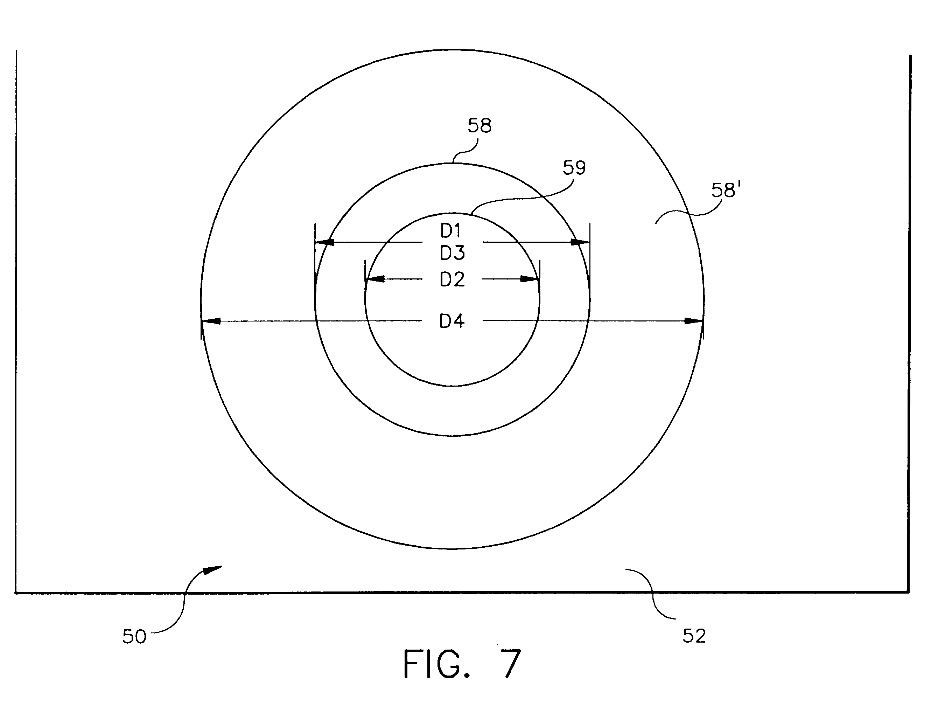

Referring to Figure 7, potential savings are realized in the dispensing of a liquid all at once on to the test surface area of a test element. A typical test element 50 is shown for illustrative purposes and having a chemistry portion 58'. If liquid, such as sample, is applied to element 50 using a point source (such as a pipette tip) chemistry portion 58' must be provided having a diameter D4, which is typically at least 11mm due to the flow characteristics of the liquid, to provide a detection or read area 59 having a diameter D2 of about 3mm. Using a transfer element 10 as described, however, minimizes the amount of liquid required to provide an equivalent read area by delivering the liquid all at once, as a surface dispersed quantity, so that a chemistry portion 58 can be provided having a diameter D3 approximately equal to that of D2. In the embodiment illustrated, D3 is about 4mm for tolerance and targeting purposes.

A preferred use of the above is to apply a diluent as liquid 44. However, as will be seen, the same apparatus can be used similarly to apply a patient sample subsequently.

Some residual liquid 47 may remain within grooves 8 after liquid has been transferred. Lower surface 6 is then preferably washed, such as by immersing transfer element 10 into a container of wash fluid.

Alternatively, supporting surface 6 can be jet-sprayed (not shown) or other means may be used which will remove residual diluent remaining within grooves 8 can be used. Lower surface 6 may then be blotted dry such as by placing grooves 8 directly in contact with another surface, or by heating surface 6 (not shown) to boil off residual moisture.

While the surface of test element 50 is still wetted with some liquid quantity 44, transfer element 10 is lowered into a container containing a patient liquid in the same manner as shown in Figure 3A. Liquid is then acquired as previously shown in Figure 3B. Lower surface 6 can then be scraped as shown in Figure 4 and positioned and brought into contact with test element 50, as shown previously in Figures 5A and 5B.

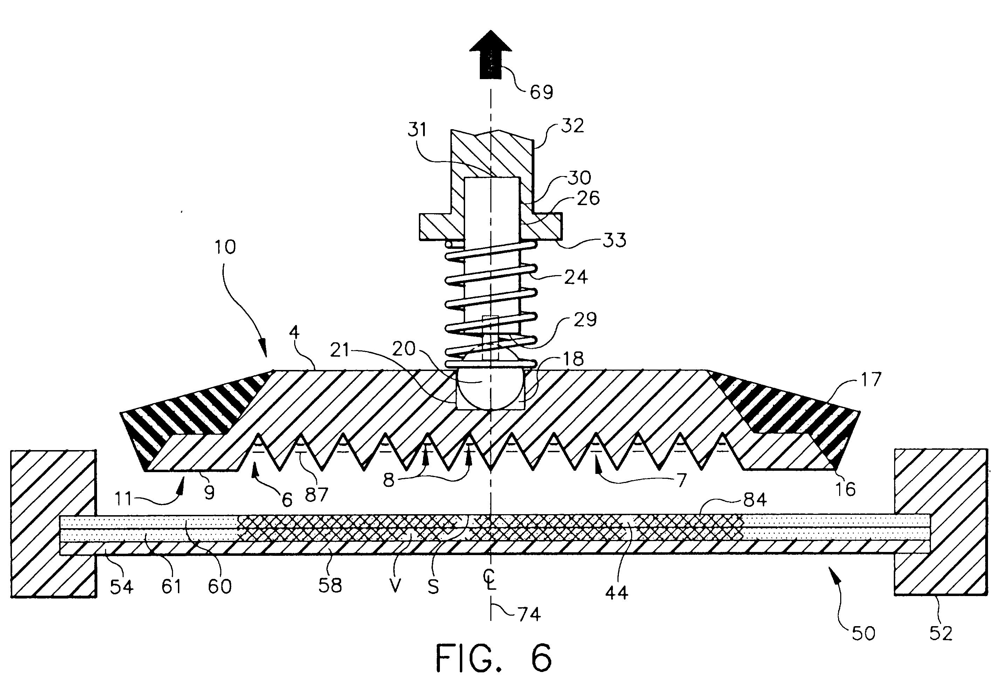

Referring to Figure 6, the quantity of sample 84 added to area S mixes with diluent 44, which typically has a much lower viscosity. The sample 84, by mixing with diluent 44 already impregnated into reactant layers 60, 61 is caused to vertically diffuse therein. Because the size of grooves 8 are known, a predetermined amount of liquid sample is added to area S all at once.

After liquid 84 has been dispensed, transfer element 10 can be made reusable by washing any small residual liquid 87 remaining within grooves 8 (not shown).

As noted, by using a method as herein described there is no longer a requirement for a spreading layer to diffuse the patient liquid across chemistry portion 58 of a test element 50. The substantially uniform layer of diluent applied to the testing surface of the test element provides an adequate transport means to distribute the patient liquid using either apparatus. The removal of the need for a spreading layer can greatly simplify the cost and manufacture of a dried chemistry test element.

## Claims

1. A method of applying a patient sample to a test element (50; 50A) which is useful for the testing of liquid analytes in the sample, the test element (50; 50A) comprising a support frame (52; 52A) and a test surface area (S), the method being carried out prior to testing and comprising the steps of:-
a) depositing a quantity of liquid diluent on to the test surface area (S) overlying a test volume (V) of the test element (50; 50A) so as to achieve simultaneous contact of the diluent uniformly across the entirity of the surface area (S) all at once so that immediately upon deposit, the ratio of the wetted surface area (S) to the volume (V) is such that there is no extensive horizontal flow over the surface area (S); and
b) dispensing a liquid sample on to the test surface area (S) while it is still wetted with the diluent.

2. A method according to claim 1, wherein step a) comprises the step of spraying a thin layer of liquid diluent on to the test surface area (S).

3. A method according to claim 1 or 2, wherein step b) comprises dispensing a liquid sample from an orifice (71) in a dispensing tip (70; 74).

4. A method of dispensing a patient liquid sample on to a test element (50; 50A), the test element (50; 50A) having a support frame (52; 52A) and at least one dried reagent layer (60, 61; 60A, 61A) centrally disposed on the support frame (52; 52A), the method comprising the steps of:-
a) applying a quantity of liquid diluent on to a transfer element (10) as a surface-dispersed quantity, the transfer element (10) having a liquid-impermeable supporting surface (7) for supporting the quantity of liquid diluent;
b) placing the supporting surface (7) of the transfer element (10) into simultaneous contact uniformly across a test surface area (S) of the test element (50; 50A) which comprises the at least one reagent layer (60, 61; 60A, 61A) to transfer diluent to the test element (50; 50A) as a surface-dispersed quantity all at once ; so that immediately upon deposit, the ratio of the wetted surface area (S) to the volume (V) is such that there is no extensive horizontal flow over the surface area (S)
c) washing the supporting surface (7) of the transfer element (10) to remove diluent therefrom;
d) applying a quantity of liquid sample on to the supporting surface (7) of the transfer element (10); and
e) placing the supporting surface (7) of the transfer element (10) in contact with the test element (50; 50A) while the test element is still wetted with diluent.

5. A method according to claim 4, further comprising the step of removing excess liquid material from the transfer element (10) prior to applying diluent to the test element (50; 50A).

6. A method according to claim 4 or 5, wherein the transfer element (10) further comprises means (17) disposed about its periphery for absorbing excess liquid.

7. A method according to any one of claims 4 to 6, wherein step e) comprises the step of applying the liquid sample on to the entirety of the test surface area (S) so as to achieve instantaneous contact of the diluent uniformly across the surface area (S) as a surface-dispersed quantity.

8. A method according to any one of claims 4 to 7, wherein the supporting surface (7) of the transfer element (10) has an area (D1) for supporting a liquid over an area approximately equal to the area (D3) of the test surface (S) of the test element (50; 50A) and means (17) for absorbing excess liquid from the supporting surface (7) prior to dispensing therefrom.

## Patentansprüche

1. Verfahren zum Aufbringen einer Patientenprobe auf ein Testelement (50; 50A), das für das Testen von flüssigen Analyten in der Probe zweckmäßig ist, wobei das Testelement (50; 50A) einen Tragrahmen (52; 52A) und einen Testflächenbereich (S) umfaßt und das Verfahren vor dem Testen durchgeführt wird und die Schritte umfaßt:
a) Aufbringen einer Menge eines flüssigen Verdünnungsmittel auf den Testflächenbereich (S), der über einem Testvolumen (V) des Testelementes (50; 50A) liegt, damit eine gleichzeitige Berührung des Verdünnungsmittels gleichmäßig über die Gesamtheit des Oberflächenbereichs (S) insgesamt sofort erreicht wird, so daß unmittelbar nach dem Aufbringen das Verhältnis des benetzten Oberflächenbereichs (S) zu dem Volumen (V) derart ist, daß kein extensives, horizontales Fliessen über den Oberflächenbereich (S) stattfindet; und
b) Verteilen einer flüssigen Probe auf dem Testflächenbereich (S), während er noch mit dem Verdünnungsmittel benetzt ist.

2. Verfahren nach Anspruch 1, wobei Schritt a) den Schritt des Versprühens einer dünnen Schicht eines flüssigen Verdünnungsmittels auf den Testflächenbereich (S) umfaßt.

3. Verfahren nach Anspruch 1 oder 2, wobei Schritt b) die Abgabe einer flüssigen Probe aus einer Öffnung (71) in einer Abgabespitze (70; 74) umfaßt.

4. Verfahren zum Abgeben einer flüssigen Patientenprobe auf ein Testelement (50; 50A), wobei das Testelement (50; 50A) einen Tragrahmen (52; 52A) und mindestens eine getrocknete Reagenzschicht (60, 61; 60A; 61A) aufweist, die in der Mitte auf dem Tragrahmen (52; 52A) angeordnet ist, wobei das Verfahren die Schritte umfaßt:
a) Aufbringen einer Menge eines flüssigen Verdünnungsmittels auf ein Überführungselement (10) als eine flächendispergierte Menge, wobei das Überführungselement (10) eine flüssigkeitsundurchlässige Tragfläche (7) zum Aufnehmen des flüssigen Verdünnungsmittels aufweist;
b) Plazieren der Tragfläche (7) des Überführungselementes (10) in einem gleichzeitigen Kontakt gleichmäßig über einem Testflächenbereich (S) des Testelementes (50; 50A), das die mindestens eine Reagenzschicht (60, 61; 60A; 61A) aufweist, um das Verdünnungsmittel als eine flächendispergierte Menge insgesamt sofort auf das Testelement (50; 50A) zu übertragen, so daß unmittelbar nach dem Aufbringen das Verhältnis des benetzten Oberflächenbereichs (S) zu dem Volumen (V) derart ist, daß kein extensives, horizontales Fließen über den Oberflächenbereich stattfindet;
c) Waschen der Tragfläche (7) des Überführungselementes (10) zum Entfernen des darauf befindlichen Verdünnungsmittels ;
d) Aufbringen einer Menge einer flüssigen Probe auf die Tragfläche (7) des Überführungselementes (10); und
e) Inberührungbringen der Tragfläche (7) des Überführungselementes (10) mit dem Testelement (50; 50A) während das Testelement noch mit dem Verdünnungsmittel benetzt ist.

5. Verfahren nach Anspruch 4, ferner umfassend den Schritt des Entfernens übermäßigen, flüssigen Materials von dem Überführungselement (10) vor dem Aufbringen des Verdünnungsmittels auf das Testelement (50; 50A).

6. Verfahren nach Anspruch 4 oder 5, wobei das Überführungselement (10) ferner Mittel (17) umfaßt, die um seinen Umfang herum zum Absorbieren überschüssiger Flüssigkeit angeordnet sind.

7. Verfahren nach einem der Ansprüche 4 bis 6, wobei Schritt e) den Schritt des Aufbringens der flüssigen Probe auf die Gesamtheit des Testflächenbereichs (S) umfaßt, damit ein sofortiger Kontakt des Verdünnungsmittels gleichmäßig über den Oberflächenbereich (S) als eine flächendispergierte Menge erreicht wird.

8. Verfahren nach einem der Ansprüche 4 bis 7, wobei die Tragfläche (7) des Überführungselementes (10) einen Bereich (D1) zur Aufnahme einer Flüssigkeit auf einen Bereich hat, der annähernd gleich dem Bereich (D3) der Testfläche (S) des Testelementes (50; 50A) ist und Mittel (17) zum Absorbieren überschüssiger Flüssigkeit von der Tragfläche (7) vor dem Abgeben von derselben aufweist.

## Revendications

1. Procédé permettant d'appliquer un échantillon prélevé sur un patient, sur un élément d'essai (50 ; 50A) qui puisse être utilisé pour étudier des analytes liquides contenus dans l'échantillon, l'élément d'essai (50 ; 50A) comprenant un cadre support (52 ; 52A) et une surface d'essai (S), le procédé étant mis en oeuvre avant l'essai, et comprenant les étapes qui consistent à :
a) déposer en une seule fois une certaine quantité de diluant liquide sur la surface d'essai (S) sous-jacente à un volume d'essai (V) de l'élément d'essai (50 ; 50A), de façon à mettre le diluant en contact, d'une manière simultanée et uniforme, avec la totalité de la surface (S), de telle sorte que, immédiatement après la déposition, le rapport aire de la surface (S) mouillée/volume (V) soit tel qu'il n'y ait pas d'écoulement horizontal sur la surface (S) ; et
b) distribuer un échantillon liquide sur la surface d'essai tandis qu'elle est encore mouillée de diluant.

2. Procédé selon la revendication 1, dans lequel l'étape a) comprend l'étape qui consiste à pulvériser une fine couche de diluant liquide sur la surface d'essai (S).

3. Procédé selon la revendication 1 ou 2, dans lequel l'étape b) comprend l'étape qui consiste à distribuer un échantillon liquide à partir d'un orifice (71) d'un embout distributeur (70 ; 74).

4. Procédé permettant de distribuer, sur un élément d'essai (50 ; 50A), un échantillon liquide prélevé sur un patient, l'élément d'essai (50 ; 50A) possédant un cadre support (52, 52A) et au moins une couche de réactif séché (60, 61 ; 60A, 61A) disposée au centre du cadre support (52 ; 52A), le procédé comprenant les étapes qui consistent à :
a) appliquer une certaine quantité de diluant liquide sur un élément de transfert (10), sous la forme d'une quantité dispersée en surface, l'élément de transfert (10) possédant une surface de support (7) imperméable aux liquides, pour supporter la quantité de diluant liquide ;
b) mettre en contact la surface de support (7) de l'élément de transfert (10), d'une manière simultanée et uniforme, avec toute une surface d'essai (S) de l'élément d'essai (50 ; 50A) qui comprend la au moins une couche de réactif (60, 61 ; 60A, 61A) pour transférer en une seule fois le diluant à l'élément d'essai (50 ; 50A) sous la forme d'une quantité dispersée en surface, de telle sorte que, immédiatement après la déposition, le rapport aire de la surface (S) mouillée/volume (V) soit tel qu'il n'y ait pas d'écoulement horizontal sur la surface ;
c) laver la surface de support (7) de l'élément de transfert (10) pour en enlever le diluant ;
d) appliquer une certaine quantité d'échantillon liquide sur la surface de support (7) de l'élément de transfert (10) ; et
e) mettre la surface de support (7) de l'élément de transfert (10) en contact avec l'élément d'essai (50 ; 50A) tandis que l'élément d'essai est encore mouillé avec le diluant.

5. Procédé selon la revendication 4, comprenant en outre l'étape consistant à enlever le liquide en excès de l'élément de transfert (10) avant d'appliquer le diluant sur l'élément d'essai (50 ; 50A).

6. Procédé selon la revendication 4 ou 5, dans lequel l'élément de transfert (10) comprend en outre des moyens (1) disposés autour de sa périphérie pour absorber le liquide en excès.

7. Procédé selon l'une quelconque des revendications 4 à 6, dans lequel l'étape e) comprend l'étape consistant à appliquer l'échantillon liquide sur la totalité de la surface d'essai (S) de façon à mettre le diluant en contact, de manière instantanée et uniforme, avec toute la surface (S), sous la forme d'une quantité dispersée en surface.

8. Procédé selon l'une quelconque des revendications 4 à 7, dans lequel la surface de support (7) de l'élément de transfert (10) a une aire (de diamètre D1) pour supporter un liquide sur une aire approximativement égale à l'aire (de diamètre D3) de la surface d'essai (S) de l'élément d'essai (50 ; 50A) et possède un moyen (17) pour absorber le liquide en excès de la surface de support (7) avant de le distribuer à partir de celle-ci.
